# EUROPEAN PATENT APPLICATION

(11) **EP 3 138 411 A1**
(43) Date of publication of application: **08.03.2017**
(21) Application number: 15183587.3
(22) Date of filing: 02.09.2015
(51) Int. Cl.: A23L 2/60, A23L 27/21, A23L 27/23, A23L 27/30, A23L 27/60, A23L 7/117

(54) **STEVIA-CONTAINING FOOD AND BEVERAGE COMPOSITIONS**

(71) Applicant: Ohly GmbH, 22041 Hamburg (DE)
(72) Inventor: SCHUBE, Violetta, 21255 Tostedt (DE); PAARMANN, Christiane, 22359 Hamburg (DE)
(74) Representative: Uexküll & Stolberg

(57) **Abstract**

The present invention provides food or beverage compositions, such as yoghurts puddings, fruit preparations or lemonades, which comprise (a) one or more steviol glycosides as sweetening agents, and (b) yeast extract or yeast autolysate. The invention also provides a sweetening composition comprising (a) one or more steviol glycosides, and (b) yeast extract or yeast autolysate. The present invention further provides a method for eliminating or reducing a steviol glycoside-related off-taste in a food or beverage composition. Finally, the present invention relates to the use of a yeast extract or yeast autolysate for eliminating or reducing a steviol glycoside-related off-taste in a food or beverage composition.

## Description

The present invention provides food or beverage compositions, such as yoghurts, puddings, fruit preparations or lemonades, which comprise (a) one or more steviol glycosides as sweetening agents, and (b) yeast extract or yeast autolysate. The invention also provides a sweetening composition comprising (a) one or more steviol glycosides, and (b) yeast extract or yeast autolysate. The present invention further provides a method for eliminating or reducing a steviol glycoside-related off-taste in a food or beverage composition. Finally, the present invention relates to the use of a yeast extract or yeast autolysate for eliminating or reducing a steviol glycoside-related off-taste in a food or beverage composition.

### BACKGROUND OF THE INVENTION

The prevalence of overweight and obesity is increasing worldwide at an alarming rate. According to the information provided by the World Health Organisation (WHO), more than 1.9 billion adults worldwide were overweight in 2014, i.e. they had a body mass index (BMI) of 25 or more. Within the group of overweight people, about 600 million worldwide were obese having a BMI of 30 or higher. Stated differently, about 39% of the adults worldwide were overweight in 2014, and 13% of them were obese. Although the worldwide prevalence of obesity already doubled between 1980 and 2014, these numbers are likely to increase in the future, e.g. due to the rising wealth in the emerging countries.

It is long known that overweight and obesity are major risk factors for a number of different diseases and disorders, including atherosclerotic cardiovascular diseases, insulin resistance, diabetes mellitus, endocrine disturbances, pulmonary diseases, obstructive sleep apnea, osteoarthritis, certain types of cancer, such as endometrial, breast, and colon cancer. In children, the situation is particularly worrying. Obesity in childhood frequently results in premature death and/or disability in adulthood. Apart from this, obese children experience breathing difficulties, an increased risk of fractures, hypertension, insulin resistance and psychological problems.

In simple terms, obesity is a consequence of an energy imbalance, i.e. the intake of energy by food exceeds the energy expenditure over a certain period of time. Under these circumstances, a person gains weight. Only a limited number of cases are influenced by factors such as genetic predisposition or psychiatric disorders (Bleich et al. (2008), Ann Rev Public Health 29: 273-95). Against this background, numerous governmental and non-governmental health organizations recommend limiting the daily energy intake from fats and sugars by avoiding high-density food and beverages. While numerous food items are available which are suitable for preventing an energy imbalance, e.g. fruits, vegetables, legumes, whole grains and the like, modern industrially produced food items are often unsuitable for this purpose, because they often contain excessive amounts of sugars and fats. For example, convenience products have become established in many households worldwide which allow for the preparation of a complete meal in a timesaving manner. Although these products tend to be high in fat and energy-dense, it is not likely that consumers will abstain from their use due to health issues.

Accordingly, considerable efforts have been made to reduce sugar and fat from modern food items to reduce their adverse effect on energy balance. However, as most consumers have a preference for sweet foods, the mere reduction of sugar and fat often adversely affects consumer's acceptance. In particular, a reduced sweetness regularly results in the refusal of the product by the consumer. For this reason, it has been contemplated to reduce the caloric value of a food or beverage product without affecting sweetness by replacing part of the sugar with artificial sweeteners such as sorbit, cyclamate, aspartame, sucralose, neotame and adventame. Although these compounds exhibit many times the sweetness of sucrose, the sensation of sweetness is often different from sucrose and is considered unpleasant by some consumers. In addition, when used in high concentrations, artificial sweeteners often produce a bitter off-taste. EP 0 418 616 and WO 03/063613 discuss methods for reducing the off-taste induced by artificial sweeteners like aspartame. Also, it has been reported that the use of artificial sweeteners can affect the mouthfeel and texture of beverages, e.g. sweet tea. Apart from their different taste, there is an ongoing discussion whether artificial sweeteners can be associated with an increased cancer risk. Finally, the fact that artificial sweeteners are chemically synthesized compounds rather than naturally occurring products is not supportive for their acceptance by consumers.

Stevia is a completely natural sweetener which is extracted from the leaves of the plant *Stevia rebaudiana.* It is about 200-300-fold sweeter than normal sucrose and has been used as a natural sweetener in South America and Japan for several decades. Stevia is becoming increasingly popular in the European Union and the USA. However, a significant drawback of Stevia is that some of its components, mainly steviol glycosides, react in high concentrations with receptors on the human tongue which mediate a strong and long-lasting bitter taste. Consequently, the use of Stevia as a sugar replacement compound is restricted to concentrations which are sufficiently low to avoid the bitter off-taste.

In view of the above, an objective of the present invention is to provide food and beverage items with reduced sugar content without compromising its taste. More specifically, it is an objective of the present invention to provide food and beverage items with reduced sugar content in which the sugar has been replaced by a sweetener that contains less energy compared to sugar and, at the same time, does not cause any unpleasant off-taste to allow its use in high concentrations. The objective is achieved by the novel compositions and methods which are described herein.

### DESCRIPTION OF THE INVENTION

It has been found in the course of the present invention that the bitter aftertaste caused by high concentrations of steviol glycosides can be effectively countervailed by the addition of yeast extract or yeast autolysate of a defined composition. Without wishing to be bound by theory, it can be assumed that some yeast-derived components block a certain receptor type on the human tongue that would otherwise mediate the bitter sensation by interacting with steviol glycosides.

The present invention therefore found a simple, natural and inexpensive way that allows for a broader use of the well-accepted natural sweetener Stevia, thereby making a significant contribution towards healthier food and beverage products which are characterized by a reduced level of sugar and assisting consumers in maintaining a beneficial energy balance. Accordingly, the findings of the present invention allow for a further reduction of the sugar content in food and beverages. Even though the use of Stevia has become increasingly popular in recent years, its use for reducing the sugar content in food and beverages is currently hampered by the unpleased aftertaste that occurs when Stevia is used in high concentrations. So far, the reduction of sugar that was achieved in food and beverages was limited to a maximum of about 30%. As shown in the below examples, the present invention allows the reduction of up to about 50% of the sugar that is contained in a food or beverage item without any adverse change in taste. Due to the significantly higher sweetening capacity of Stevia in comparison to sugar, the present invention also makes feasible the production of food and beverages at reduced costs.

Accordingly, in a first aspect, the present invention provides a novel food or beverage composition, said composition comprising:
(a) one or more steviol glycosides in an amount effective to provide a sweet taste to said food or beverage composition; and
(b) a yeast extract or yeast autolysate in an amount effective to reduce or eliminate an off-taste that is caused by the one or more steviol glycosides,
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).

In a second aspect, the present invention provides a sweetening composition, said composition comprising:
(a) one or more steviol glycosides; and
(b) a yeast extract or yeast autolysate
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).

As used herein, all amounts of yeast extract or autolysate components, and in particular the amounts of free amino acids and 5'-nucleotides, such as 5'-GMP and 5'-IMP, are provided herein as percentages (w/w) of the NaCl-free yeast extract or yeast autolysate dry matter.

The novel food and beverage compositions of the first aspect of the invention and the sweetening composition of the second aspect of the invention comprise, as a natural sweetener, one or more than one, i.e. a mixture of different, steviol glycosides in combination with a yeast extract or autolysate.

### Steviol glycosides

Steviol glycosides with sweetening properties are well known in the art and have been isolated and described based on the original Stevia extract. Methods for purifying or enriching steviol glycosides from *Stevia rebaudiana* plants have been reported, e.g. in U.S. Patents 5,972,120; 5,962,678; 7,838,044 and 7,862,845. As used in the context with the invention, steviol glycosides are compounds comprising the diterpene steviol of the formula 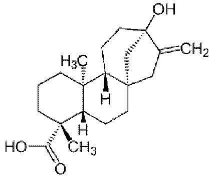 as a basic building block which has been glycosylated by the attachment of sugar moieties to the hydroxyl groups in positions C13 and/or C19. Glycosylation at positions C13 and C19 can result in the attachment of one or more sugar moieties to these positions of the steviol molecule.

In a preferred aspect, the steviol glycoside that is used in the food, beverage or sweetening compositions of the present invention comprises two or more sugar moieties. In another preferred aspect, the steviol glycoside comprises three or more sugar moieties. In yet another preferred aspect, the steviol glycoside comprises four or more sugar moieties. Preferably, the sugar moieties that are attached in the course of glycosylation are selected from the sugars glucose, rhamnose and xylose.

For example, a steviol glycoside for use in the food, beverage or sweetening composition of the present invention can comprise 1, 2, or 3 glucose moieties in position C13 and no sugar moieties in position C19. Alternatively, a steviol glycoside for use in the composition of the present invention can comprise 1, 2, or 3 glucose moieties in position C13 and 1 glucose moieties in position C19. Alternatively, it can comprise 1, 2, or 3 glucose moieties in position C13 and 2 glucose moieties in position C19.

In a particularly preferred embodiment of the invention, the food, beverage or sweetening composition comprises an extract from the *Stevia rebaudiana* plant, preferably an extract from leaves of the plant. In this case, the food, beverage or sweetening composition will comprise a mixture of different of the above defined steviol glycosides. It has been found that extracts of the *Stevia rebaudiana* plant contain a mixture of 10-12 different steviol glycosides, including Stevioside, Rebaudioside A-F, and Dulcoside A. The main steviol glycosides in extract of the *Stevia rebaudiana* plant are Stevioside and Rebaudioside A-C.

In an alternative embodiment, the food, beverage or sweetening composition of the invention comprises several of the steviol glycosides that occur naturally in *Stevia rebaudiana.* For example, the food, beverage or sweetening composition may comprise 1, 2, 3, 4, 5, 6, 7, or 8 of the steviol glycosides that are normally present in *Stevia rebaudiana.* Alternatively, the food, beverage or sweetening composition of the invention may comprise only some of the steviol glycosides that occur naturally in *Stevia rebaudiana.* In one embodiment, the composition of the invention comprises less than 7 different steviol glycosides, preferably less than 5, less than 4, less than 3, or less than 2 of the naturally occurring steviol glycosides.

In a preferred embodiment, the food, beverage or sweetening composition of the invention comprises the tetra-glycoside Rebaudioside A or a derivative thereof. Rebaudioside A, which is known as 19-0-beta-glucopyranosyl-13-0-(beta-glucopyrano-syl(1-2)-beta-glucopyranosyl(1-3))-beta-glucopyranosyl-13-xhy-droxykaur-16-en-19-oic acid, has the following formula:

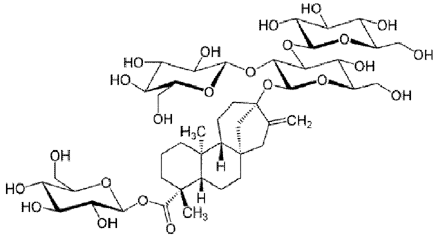

It contains a total of four glucose moieties, one of which is attached at the C19 position while the remaining three glucose moieties are attached to the C13 position of the molecule. It will be understood that certain modifications to the above structure can be made that do not affect the ability of the molecule to induce a sweet taste.

In another preferred embodiment, the food, beverage or sweetening composition of the invention comprises the tri-glycoside Stevioside or a derivative thereof. Stevioside, which is known as 13-[(2-O-beta-D-Glucopyranosyl-alpha-D-glucopyranosyl)oxy]-kaur-16-en-18-oic acid beta-D-glucopyranosyl ester, has the following formula:

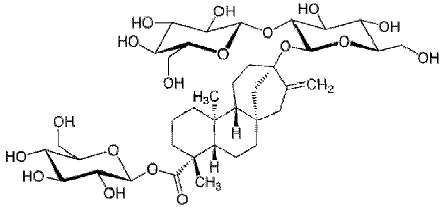

It contains three glucose moieties, one of which is attached at the C19 position while the remaining two are attached to the C13 position of the steviol. It will once again be understood that certain modifications to the above structure can be made that do not affect the ability of the molecule to induce a sweet taste.

It is particularly preferred that the food, beverage or sweetening compositions of the invention comprise the steviol glycosides Stevioside and Rebaudioside A as sweeteners. Alternatively, it is preferred that the food, beverage or sweetening compositions of the invention comprise an extracts of the *Stevia rebaudiana* plant, which is referred to herein as Stevia. Apart from the natural plant extract, the compositions of the invention may also comprise a mixture of steviol glycosides that has been prepared by admixing at least two isolated or partially isolated steviol glycosides. If Stevia or an artificial mixture of steviol glycosides is used, it is further preferred that the amount of Rebaudioside A in that mixture is at least 80%, more preferably at least 85%, at least 90%, or at least 95%.

The food or beverage compositions of the invention comprise the one or more steviol glycosides in an amount that is sufficient to provide the composition with a sweet taste. As used herein, an amount of a steviol glycoside that is effective for providing a sweet taste to a food or beverage item is an amount that causes a subjective sweet taste perception relative to a control item, i.e. the same food or beverage item to which no sweetener has been added.

The skilled person will be able to determine the amount of steviol glycoside or steviol glycosides which is effective to provide a sweet taste to a specific food or beverage composition. The specific amount will depend on the food or beverage item, the specific nature or mixture of steviol glycosides and the desired degree of sweetness. Normally, the amount of the one or more steviol glycosides in the food or beverage composition will be at least 0.001% (w/w), preferably at least 0.005% (w/w), at least 0.01% (w/w), at least 0.02% (w/w), at least 0.03% (w/w), at least 0.04% (w/w), at least 0.05% (w/w), at least 0.06% (w/w), at least 0.07% (w/w), at least 0.08% (w/w), at least 0.09% (w/w), at least 0.1% (w/w), or more. In some embodiments of the invention, the composition will comprise at least 0.2% (w/w), at least 0.3% (w/w), at least 0.4% (w/w) or at least 0.5% (w/w). In some embodiments, the above amounts refer to the amount of all steviol glycosides in the compositions. In other embodiments, the above amounts refer to the amount of Rebaudioside A and Stevioside in the composition. In still further embodiments, the above amounts exclusively refer to the amount of Rebaudioside A in the composition. In still further embodiments, the above amounts exclusively refer to the amount of Stevioside in the composition.

In the sweetening composition of the invention, the one or more steviol glycosides will be present in higher concentrations. For example, the sweetening composition may comprise the one or more steviol glycosides in an amount of at least 80% (w/w), at least 90% (w/w), or at least 95% (w/w).

### Yeast extracts and yeast autolysates

The invention is based on the insight that an unpleasant off-taste of a steviol glycoside-containing food or beverage composition can be prevented or at least significantly reduced by the addition of a yeast extract or yeast autolysate. Accordingly, the food, beverage or sweetening composition of the invention comprises, apart from the one or more steviol glycosides described above, as a second component a yeast extract or a yeast autolysate.

Yeast extracts and autolysates are well known in the art and are widely used in the food industry, e.g. as natural flavoring preparation. As used herein, a yeast extract refers to a composition which comprises the water soluble components of yeast cells, in particular amino acids, peptides, and carbohydrates.

Autolysis is the most frequently used process for the production of yeast extract. In this process, endogenic enzymes within the yeast are activated under controlled conditions such that proteins and other yeast components are degraded and hydrolysed to smaller soluble compounds. The autolysis can also be further assisted by adding food-grade enzymes. After the completion of the autolysis, soluble compounds are separated from insoluble cell wall components. For the production of yeast extract containing 5'-ribonucleotides, a thermal inactivation of the yeast own enzymes is necessary to prevent uncontrolled digestion of the yeast RNA. External enzymes can then be added to hydrolyse the yeast RNA and proteins to 5'-ribonucleotides, amino acids and peptides.

A yeast autolysate is essentially described in the way set out above in the context with yeast extracts, with the exception that soluble matter is not separated from the insoluble cell debris. Therefore, yeast autolysates comprise not only soluble amino acids, peptides, and carbohydrates, but also insoluble cell wall components such as lipids and glycoproteins.

The type of yeast that is used for producing the yeast extract or autolysate to be included into the food and beverage compositions of the invention is not particularly restricted. In fact, any edible yeast that is suitable for being used in food items may be used. In a preferred aspect of the invention, the yeast is selected from the genera Saccharomyces, Kluyveromyces, and Candida. In a particularly preferred embodiment, the yeast is Saccharomyces cerevisiae. In another particularly preferred embodiment, the yeast is Kluyveromyces fragilis. In yet another particularly preferred embodiment, the yeast is Candida utilis.

The yeast extract or autolysate may be used in a liquid or paste form. Alternatively, it can be used in a purified, concentrated or dried form. When used in dried form, the extract or autolysate may be in the form of a powder.

An amount of a yeast extract or autolysate is effective to reduce or eliminate a steviol glycoside-related off-taste, e.g. a bitter taste, if said amount, after its addition to a food or beverage composition that contains one or more steviol glycosides in concentrations that cause the off-taste, results in a subjective reduction of said off-taste compared to a control item, i.e. the same food or beverage item which is free of yeast extract or autolysate. Normally, the amount of the yeast extract or autolysate in the composition of the invention will be at least 0.0001% (w/w), preferably at least 0.0005% (w/w), at least 0.001% (w/w), at least 0.002% (w/w), at least 0.003% (w/w), at least 0.004% (w/w), at least 0.005% (w/w), at least 0.006% (w/w), at least 0.007% (w/w), at least 0.008% (w/w), at least 0.009% (w/w), at least 0.01% (w/w). An amount of between 0.0001 and 0.001% (w/w) is particularly preferred.

The yeast extracts or autolysates for use in the present invention are further characterized by a specifically low content of free amino acids. The content of the free amino acids is a measure for the degree of hydrolysis that has occurred during the production of the yeast extract. A low content of free amino acids is indicative for a low degree of hydrolysis and a high content of peptides in the yeast extract or autolysate. It has been surprisingly found in the context with the present invention that the peptide content is the decisive parameter for the ability of a yeast extract to mask undesirable off-tastes. A high peptide content which is the result of a low degree of hydrolysis provides for a particularly good masking of the steviol glycoside-related off-taste. Moreover, a low degree of hydrolysis prevents the formation of high glutamate concentrations in the yeast extracts or autolysates. High glutamate concentrations lead to a brothy taste which is undesirable for sugar reduction applications.

Accordingly, it is preferred that the amount of free amino acids in the yeast extracts for use in the compositions and methods of the present invention is less than 15% (w/w), more preferably less than 14%, less than 13%, less than 12%, less than 11%, less than 10%, less than 9%, less than 8%, less than 7%, less than 6%, or less than 5%. For autolysates, the amount of free amino acids is normally lower compared to yeast extracts. Accordingly, the amount of free amino acids in the yeast autolysates for use in the compositions and methods of the present invention is normally less than 10% (w/w), preferably less than 9%, less than 8%, less than 7%, less than 6%, less than 5%, less than 4%, less than 3%, less than 2%, or less than 1%.

Stated differently, it is preferred that the degree of hydrolysis, i.e. the proportion of original peptide bonds that have been cleaved in the yeast extracts or autolysates of the present invention, is not too high which ensures an efficient masking of the steviol glycoside-related off-taste. Specifically, the degree of hydrolysis is about 35% or less, about 30% or less or about 25% or less. The degree of hydrolysis preferably is between 25-35%, more preferably between 27-33%, and even more preferably between 28-32%, such as about 30%. Methods for determining the degree of hydrolysis are known in the art and rely, for example, on the determination of the percentage of nitrogen that is present in alpha amino groups of amino acids, peptides and proteins relative to the total amount of protein nitrogen. The degree of hydrolysis can be determined by methods known in the art, e.g. by the OPA method reported by (2001), J Food Sci 66:642-646).

Another insight of the invention is that the amount of 5'-ribonucleotides in the yeast extract is not particularly decisive for preventing off-taste produced by a steviol glycoside. Instead, it is possible to prepare compositions without 5'-ribonucleotides that effectively mask any steviol glycoside-related off-taste. For some applications of the invention, it might nevertheless be preferred to use a yeast extract or autolysate which comprises a certain amount of 5'-ribo-nucleotides. Therefore, in some embodiments, the yeast extract or autolysate to be used in the compositions of the invention comprises 5'-ribonucleotides. As used herein, 5'-ribonucleotides refer to the 5'-monophosphate ribonucleotides which result from the RNA degradation that occurs after disruption of the yeast cells. As used herein, the term "5'-ribonucleotides" collectively refers to 5'-adenine monophosphate (5-AMP), 5'-cytosine monophosphate (5'-CMP), 5'-guanine monophosphate (5'-GMP), 5'-uracil monophosphate (5'-UMP), and 5'-inosine monophosphate (5'-IMP). 5'-nucleotides, and in particular 5'-GMP and 5'-IMP, have been shown to be useful as flavor enhancing additives. In common yeast cells, the RNA content is typically between 5-15% (w/w), and it is normally further increased by performing concentration steps.

Where yeast extract is used for preparing the food, beverage or sweetening compositions of the invention, the total amount of 5'-nucleotides in said yeast extract will be between 0-70% (w/w). Thus, the concentration of each of the 5'-ribonucleotides in the yeast extract which is used in the food, beverage or sweetening compositions according to the invention may be between 0.1 and 17.5% (w/w), preferably between 0.25 and 15.0% (w/w), more preferably between 0.5 and 14.5% (w/w), and even more preferably between 2.0 and 12.5% (w/w). In particular, the concentration of each of the 5'-ribonucleotides in the yeast extract may be between 0.1 and 10% (w/w), preferably between 0.25 and 7.5% (w/w), between 0.5 and 5% (w/w), and more preferably between about 3 and 4% (w/w).

Where yeast autolysate is used for preparing the food, beverage or sweetening compositions of the invention, the total amount of 5'-ribonucleotides in said yeast autolysate will be somewhat lower, i.e. between 0-45% (w/w). Thus, the concentration of each of the 5'-ribonucleotides in the yeast extract or yeast autolysate which is used in the food or beverage composition according to the invention may be between 0.1 and 11.25% (w/w), preferably between 0.25 and 10.0% (w/w), more preferably between 0.5 and 7.5% (w/w), and even more preferably between 2.0 and 5% (w/w). In particular, the concentration of each of the 5'-ribonucleotides in the yeast autolysate may be between 0.1 and 2.5% (w/w), preferably between 0.25 and 5% (w/w), between 0.5 and 2% (w/w), and more preferably between about 1 and 2% (w/w).

Specifically, the concentration of 5'-GMP and 5'-IMP in the yeast extract or yeast autolysate each independently is at least about 0.1% (w/w), at least about 0.2% (w/w), at least about 0.25% (w/w), at least about 0.5% (w/w), at least about 0.75% (w/w), at least about 1.0% (w/w), at least about 1.25% (w/w), at least about 1.5% (w/w), at least about 1.75% (w/w), at least about 2.0% (w/w), at least about 2.25% (w/w), at least about 2.5% (w/w), at least about 3.0% (w/w), at least about 3.5% (w/w), at least about 4.0% (w/w), at least about 4.5% (w/w), at least about 5.0% (w/w), at least about 5.5% (w/w), at least about 6.0% (w/w), at least about 6.5% (w/w), at least about 7.0% (w/w), at least about 7.5% (w/w).

Since 5'-ribonucleotides are not mandatory for masking steviol glycoside-related off-tastes according to the invention, the yeast extract or autolysate which is used for preparing the food, beverage or sweetening compositions may comprise no or only a low amount of 5'-ribonucleotides. Accordingly, the total amount of 5'-ribonucleotides in the yeast extract or autolysate may be less than 30%, less than 25%, less than 20%, less than 15%, less than 14%, less than 13%, less than 12%, or less than 11%. In a particularly preferred embodiment, the amount of 5'-ribonucleotides in the yeast extract or autolysate is less than 10%, less than 9%, less than 8%, less than 7%, less than 6%, less than 5%, less than 4%, less than 3%, less than 2%, or less than 1% (w/w).

In a still further preferred embodiment, the yeast extract which is used for the compositions and methods of the invention comprises less than 10% (w/w) 5'-ribonucleotides. In another preferred embodiment, the yeast extract comprises less than 1% (w/w) 5'-ribonucleotides. In yet another preferred embodiment, the yeast extract comprises less than 10% (w/w) 5'-ribonucleotides and less than 15% (w/w) free amino acids. In yet another preferred embodiment, the yeast extract comprises less than 1% (w/w) 5'-ribonucleotides and less than 15% (w/w) free amino acids. In another preferred embodiment, the yeast autolysate which is used for the compositions and methods of the invention comprises less than 10% (w/w) 5'-ribo-nucleotides. In yet another preferred embodiment, the yeast autolysate comprises less than 1% (w/w) 5'-ribonucleotides. In yet another preferred embodiment, the yeast autolysate comprises less than 10% (w/w) 5'-ribonucleotides and less than 15% (w/w) free amino acids. In yet another preferred embodiment, the yeast autolysate comprises less than 1% (w/w) 5'-ribonucleotides and less than 15% (w/w) free amino acids.

### Food and beverage compositions

The food or beverage compositions according to the first aspect of the invention are not particularly limited. Instead, all different types of food or beverage items can profit from the new sweetening concept provided by the present invention. In particular, all food items which allow the addition of Stevia can be modified according to the invention. Food items to which a sweetening combination of steviol glycosides and yeast extract or autolysate can be added include but are not limited to dairy products (e.g. yoghurts), baked goods (e.g., bread, biscuits), puddings, fruit preparations, tomato ketchups, sauces, condiments, ice creams, breakfast cereals, chocolates, candy, fruit or wine gums, confectionaries, cakes, jams and jellies, chocolate or hazelnut spreads, and the like.

It is particularly advantageous to use the novel sweetening concept of the present invention in beverages, such as soft drinks. Sugary drinks are a major contributor to overweight and obesity. Consequently, there is an increasing interest in the reduction of sugar in beverages. Generally, all different types of beverages can be modified according to the invention by using steviol glycosides in combination with a yeast extract or autolysate. Beverages to which a sweetening combination of steviol glycosides and yeast extract or autolysate can be added, include but are not limited to flavored water; fruit punch; dairy-based beverages, e.g. drinking yoghurts, buttermilk, kefir; fruit juices; lemonades; energy and sport drinks; teas, e.g., iced tea, sweet tea, instant tea, and ready-to-drink tea; coffees, e.g., iced coffee, flavored coffee, instant coffee, and ready-to-drink coffee; soy-based beverages; milk drinks, e.g. flavored milk drinks (e.g. vanilla-, chocolate-, or strawberry-flavored); sweetened powdered drinks; caffeinated or caffeine-free soft drinks; and the like.

In a particular preferred embodiment, the product to which a sweetening combination of steviol glycosides and yeast extract or autolysate is added is a milk drink, preferably a soy milk drink. It is further preferred that the milk drink is prepared by using a yeast extract or autolysate which comprises a total of less than 1% 5'-ribonucleotides.

The compositions of the invention may include additional components which are frequently used in the field of food and nutrition technology. For example, the food or beverage compositions may comprise other sweeteners, such as glucose, maltose, sucrose, lactose, aspartame, saccharin, sucralose, or sugar alcohols. The compositions may also comprise vitamins or flavors, such as orange, vanilla, lemon, or strawberry flavors. Other common additives include coloring agents, emulsifiers, stabilizers, texturizers, preservatives, antioxidants, thickeners, and the like.

### Sweetening compositions

A sweetening composition according to the second aspect of the invention may be formulated such that it can be directly used to sweeten food or beverage items. For example the sweetening composition can be in liquid form which allows its easy application to food or beverages. Alternatively, the sweetening compositions may be in solid form, e.g., as a dried powder. In this case, the sweetening composition can be mixed into food items, e.g. yoghurts, or it can be dissolved in liquids, such as tea or coffee.

### Method for producing food and beverage compositions

In a third aspect, the present invention relates to a method for eliminating or reducing a steviol glycoside-related off-taste in a food or beverage composition, comprising
(a) providing a food or beverage composition that contains one or more steviol glycosides as a sweetening agent, and
(b) adding to said food or beverage composition an amount of a yeast extract or yeast autolysate which is effective to prevent or reduce said off-taste,
wherein the yeast extract comprises free amino acids in an amount of less than 15% (w/w) and 5'-ribonucleotides in an amount of 0-70% (w/w), and
wherein the yeast autolysate comprises free amino acids in an amount of less than 10% (w/w) and 5'-ribonucleotides in an amount of 0-45% (w/w).

In a fourth aspect, the invention provides a method for preparing a food or beverage composition, comprising
(a) providing a food or beverage composition;
(b) adding to said food or beverage composition one or more steviol glycosides in an amount effective to provide a sweet taste to said food or beverage composition; and
(c) adding to said food or beverage composition an amount of a yeast extract or yeast autolysate which is effective to prevent or reduce an off-taste that is caused by the one or more steviol glycosides,
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).

The food composition for use in a method according to the third or fourth aspect of the invention can be any of the above-described items, e.g. dairy products, such as yoghurts, baked goods such as bread or biscuits, puddings, fruit preparations, sauces, condiments, breakfast cereals, confectionaries, cakes, jams and jellies, chocolate or hazelnut spreads, and many more. Likewise, the beverage composition can be drinking yoghurt, buttermilk, kefir, fruit juice, lemonade, or a tea or coffee.

The steviol glycoside or steviol glycosides which are used in the methods according to the third or fourth aspect of the invention may be any of those which are discussed above in the section entitled "steviol glycosides", including Stevioside, Rebaudioside A-F, and Dulcoside A. Preferably, the one or more steviol glycosides which are used as a sweetening agent in the third or fourth aspect of the invention are present in the form of an extract of the *Stevia rebaudiana* plant, preferably an extract from the leaves of the plant.

The one or more steviol glycosides can be added to the food or beverage composition in the method according to the fourth aspect of the invention in an amount to provide a sweet taste to the food or beverage composition. In cases where the one or more steviol glycosides are added as sugar replacement, part of the conventional sugars (e.g. glucose and sucrose) will be omitted. The specific amount of steviol glycosides to be added to a given food or beverage composition and the amount of conventional sugar that can be replaced by steviol glycosides can be determined by routine experiments. Useful amounts of steviol glycosides that can be added to food or beverage compositions are discussed elsewhere herein.

It will not be required to significantly modify the commonly known production processes for food or beverage items to adapt them to a method according to the fourth aspect of the invention. In most cases, the addition of the steviol glycosides can be performed simultaneously with the addition of the other components, in particular sugars and sweeteners. For example, if the beverage to be modified is lemonade, the steviol glycosides will be added together with the sugar that is used for sweetening the lemonade. Alternatively, where the food product is yoghurt, the steviol glycosides may be added to the milk substrate after fermentation. It may also be possible to add the steviol glycosides after completion of the fermentation, e.g. before packaging.

The steviol glycosides and the yeast extract or autolysate may be added to the food or beverage composition simultaneously or consecutively. In one embodiment of the above method, the one or more steviol glycosides are first mixed with the yeast extract before adding the mixture to the food or beverage composition. In another embodiment steviol glycosides are added before the yeast extract or autolysate is added. In still another embodiment, the yeast extract or autolysate is added before the steviol glycosides.

The yeast extracts or autolysates for use in the method according to the third or fourth aspect of the invention are any of those discussed above in connection with the food or beverage items of the invention. As such yeast extracts or autolysates are characterized by a low content of free amino acids, i.e. less than 15% (w/w) for yeast extracts and less than 10% (w/w) for yeast autolysates.

### Use-related aspects

In a fifth aspect, the invention relates to the use of a yeast extract which comprises free amino acids in an amount of less than 15% (w/w) and 5'-ribonucleotides in an amount of 0-70% (w/w), or a yeast autolysate which comprises free amino acids in an amount of less than 10% (w/w) and 5'-ribonucleotides in an amount of 0-45% (w/w), for eliminating or reducing a steviol glycoside-related off-taste in a food or beverage composition. Preferably, the yeast extract for use in the fifth aspect of the invention comprises free amino acids in an amount of less than 15% (w/w) and less than 1% (w/w) or no 5'-ribonucleotides. Similarly, the yeast autolysate for use in the fifth aspect of the invention comprises free amino acids in an amount of less than 10% (w/w) and less than 1% (w/w) or no 5'-ribonucleotides.

The yeast extract or autolysate can also be pre-mixed with the one or more steviol glycosides before adding the mixture is contacted with the food or beverage composition. Accordingly, the invention further provides the use of a composition comprising one or more steviol glycosides as described above and a yeast extract or yeast autolysate as described above for reducing the sugar content in a food or beverage composition. As set out above, the invention is based on the insight that yeast extracts and autolysates can be used to prevent an off-taste that is induced by utilizing Stevia or certain sweetening steviol glycosides in food or beverage products. In a particular preferred embodiment, the yeast extract or yeast autolysate is used for eliminating or reducing a bitter taste caused by one or more steviol glycosides which have been used as sweeteners.

According to the fifth aspect of the invention, any yeast extract or yeast autolysate which have been discussed elsewhere herein can be used for the recited purpose. Similarly, the steviol glycosides that cause the off-taste may be those discussed above in the context with the compositions or methods of the invention.

The food or beverage compositions that may be processed by the use-related aspect of the invention are not limited and include all of the food and beverage products mentioned above.

### BRIEF DESCRIPTION OF THE FIGURES

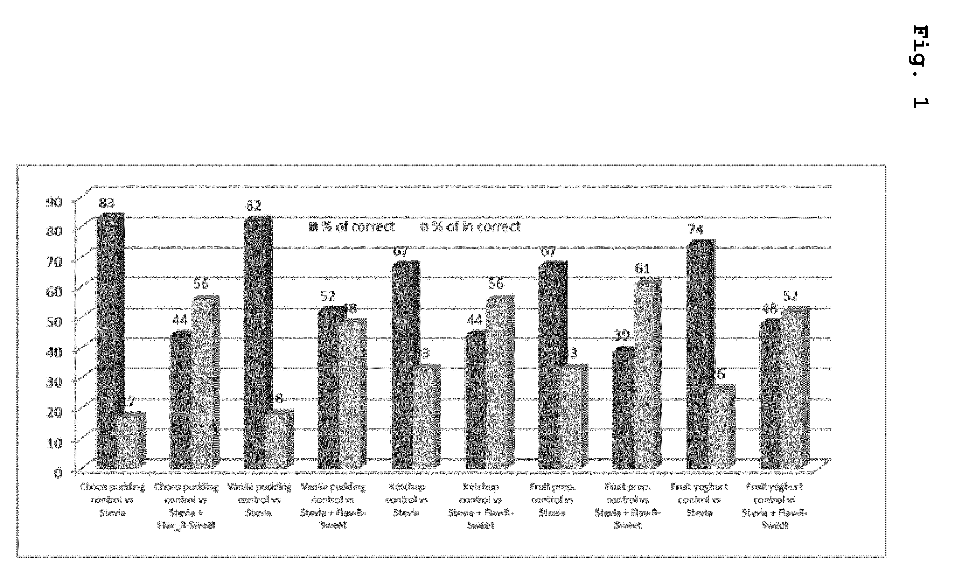

Fig. 1 shows the results of the triangle tests described in Example 6 for Chocolate pudding, Vanilla pudding, Ketchup, fruit preparations and yoghurt.

The following examples illustrate various embodiments of the invention. It will be understood that the invention is not limited by the examples.

### EXAMPLES

The following yeast extracts were used in the below examples:
Yeast extract 1 (YE1) contains 10.9% free amino acids and 28.9% of total 5' nucleotides (7.2% 5'-GMP and 7.4% 5'-IMP).
Yeast extract 2 (YE2) contains 10.9% free amino acids and 20.1% of total 5' nucleotides (4.7% 5'-GMP and 5.3% 5'-IMP).
Yeast extract 3 (YE3) contains 10.9% free amino acids and 1.6% of total 5' nucleotides (0.2% 5'-GMP and 0.0% 5'-IMP).

### EXAMPLE 1: Application test - Chocolate Pudding

A commercially available pudding powder (Dr. Oetker, original chocolate pudding), was used for the test. According to the manufacturer's instructions, the pudding is normally prepared by the addition of 50 g sugar and 500 ml milk to 50 g pudding powder.

In a first step, two pudding base compositions were prepared in accordance with below table 1. In the base compositions, part of the sugar was replaced to achieve a sugar reduction of 33% and 50%, respectively.

**Table 1 - Preparation of the base compositions:**

| | **control** | **base 1** | **base 2** |
|---|---|---|---|
| | g | g | g |
| | | 33% reduction | 50% reduction |
| Pudding powder | 26.5 | 53 | 53 |
| Sugar | 30 | 40 | 30 |
| Milk 3.5% fat | 300 | 600 | 600 |
| modified potato starch | 0 | 1.4 | 1.7 |

Both base compositions having reduced sugar content were used for preparing test compositions comprising different amounts of Stevia (containing at least 95% Rebaudioside A) and/or different amounts of a yeast extract (YE2, 0.2% solution). The test compositions were tested by the panelists. The preparation of the test compositions and the results of the corresponding sensory tests are provided in the below tables 2 & 3.

**Table 2 - Test compositions prepared with Base 1:**

| **Samples** | 1.1 | 1.2 | 1.3 | 1.4 | 1.5 |
|---|---|---|---|---|---|
| **Base 1** | 100 | 100 | 100 | 100 | 100 |
| **Stevia 0.5% solution** | 2.2 | 2.38 | 2.39 | 2.58 | 2.61 |
| **YE2 0.2% solution** | 1.45 | 1.49 | 1.59 | 1.49 | 1.59 |
| **comment** | good | Good balanced, comparable to the control | too sweet | too sweet | too sweet |

**Table 3 - Test compositions prepared with Base 2 (amounts referred to in the table are in g):**

| Samples | 1.1 | 1.2 | 1.3 | 1.4 | 1.5 |
|---|---|---|---|---|---|
| Base 2 | 100 | 100 | 100 | 100 | 100 |
| Stevia 0.5% solution | 2.62 | 2.68 | 2.81 | 2.92 | 3.03 |
| YE2 0.2% solution | 1.53 | 1.48 | 1.63 | 1.59 | 1.59 |
| comments: | less sweet | less sweet | less sweet | less sweet | slightly less sweet |

Results: The results of the test show that it is possible to replace a substantial part of the sugar that is normally used for the production of this pudding without significantly compromising the taste of the pudding. Up to 50% of the sugar that is normally added during the preparation of the pudding could be replaced by a Stevia solution, and the product was comparable sweet compared to the control with no sugar reduction.

### EXAMPLE 2: Application test - Chocolate Pudding with Almond

A commercially available pudding powder (Dr. Oetker, chocolate pudding with almond), was used for the test. According to the manufacturer's instructions, the pudding is normally prepared by the addition of 50 g sugar and 500 ml milk to 50 g pudding powder.

In a first step, a pudding base composition was prepared in accordance with below table 4. In the base composition, part of the sugar was replaced to achieve a sugar reduction of 50%.

**Table 4 - Preparation of the base compositions:**

| | **control** | **base** |
|---|---|---|
| | g | g |
| | | 50% reduction |
| Pudding powder | 33 | 66 |
| Sugar | 30 | 30 |
| Milk 3.5% fat | 300 | 596.5 |
| Purity HPC modified waxy maize starch | 0 | 3.5 |

**Table 5 - Test compositions prepared with Base:**

| Samples | 1.1 | 1.2 | 1.3 |
|---|---|---|---|
| Base | 200 | 200 | 200 |
| Stevia 1% solution | 3.25 | 3.40 | 3.20 |
| YE2 0.2% solution | 3.00 | 3.00 | 0.00 |
| comments: | Very good, intense flavour of almonds | Good, more bitter than 1.1, intensive flavour of almonds | more bitter than 1.1 and 1.2, less flavour of almonds |

Results: The results of the test show that it is possible to replace a substantial part of the sugar that is normally used for the production of this pudding without significantly compromising the taste of the pudding. Up to 50% of the sugar that is normally added during the preparation of the pudding could be replaced by a Stevia solution, and the product was still sufficiently sweet. It can be seen in sample 1.3 that the addition of Stevia without yeast extract leads to an unpleasant bitter taste.

### EXAMPLE 3: Application test - Tomato Ketchup

Tomato ketchup was prepared by mixing the ingredients listed in tables 6 and 7 below. Table 6 describes the preparation of ketchup having a sugar content reduced by 33%. Table 6 describes the preparation of ketchup having a sugar content reduced by 50%. The mixtures were heated to 85°C for 10 minutes.

**Table 6 - Ketchup with 33% sugar reduction:**

| | | 33% sugar reduction | | |
|---|---|---|---|---|
| Ingredients (Base 2) | Control | Trial No.2/1 | Trial No.2/2 | Trial No.2/3 |
| | g | g | g | g |
| Water | 44.90 | 48.50 | 48.50 | 48.50 |
| Sugar | 15.00 | 10.00 | 10.00 | 10.00 |
| tomato paste 2-conc. | 30.00 | 30.00 | 30.00 | 30.00 |
| waxy maize starch | 2.00 | 2.20 | 2.20 | 2.20 |
| vinegar 10% | 6.00 | 6.00 | 6.00 | 6.00 |
| Salt | 2.00 | 2.00 | 2.00 | 2.00 |
| ketchup flavor | 0.10 | 0.10 | 0.10 | 0.10 |
| Stevia 1 % solution | - | 1.20 | 1.20 | 1.20 |
| YE2 1% solution | - | 0.28 | 0.29 | 0.30 |

**Table 7 - Ketchup with 50% sugar reduction:**

| | | 50% reduction | | |
|---|---|---|---|---|
| Ingredients (Base 6) | Control | Trial No.6/0 | Trial No.6/1 | Trial No.6/2 |
| | | g | g | g |
| water | 44.90 | 50.850 | 50.850 | 50.850 |
| sugar | 15.00 | 7.500 | 7.500 | 7.500 |
| tomato paste 2-conc. | 30.00 | 30.000 | 30.000 | 30.000 |
| waxy maize starch | 2.00 | 2.350 | 2.350 | 2.350 |
| vinegar 10% | 6.00 | 6.000 | 6.000 | 6.000 |
| Salt | 2.00 | 2.000 | 2.000 | 2.000 |
| ketchup flavour | 0.12 | 0.12 | 0.12 | 0.12 |
| Stevia 1 % solution | | 1.600 | 1.600 | 1.600 |
| YE2 (1% solution) | | - | 0.28 | 0.29 |

Results: Although the Stevia-containing test compositions Trial No. 2/1, Trial No. 2/2 and Trial No. 2/3 in table 6 had a reduction of sugar by 33% compared to the control, almost no differences could be detected to the control composition. Similarly, the Stevia-containing test compositions Trial No. 6/0, Trial No. 6/1 and Trial No. 6/2 in table 7, which had a sugar content reduced by 50% relative to the control, showed a sweetness and consistency that was very similar to the control composition. No off-taste could be detected in any of the test compositions.

### EXAMPLE 4: Application test - Oat flakes

Oat flakes was prepared by mixing the ingredients listed in table 8 below. Samples 1-3 referred to in table 8 have a sugar content which is reduced by 50% compared to the control.

**Table 8 - Oat flakes with 50% sugar reduction:**

| | | | 50% sugar reduction | | 50% sugar reduction | | 50% sugar reduction | |
|---|---|---|---|---|---|---|---|---|
| Oat flakes | control | | sample 1 | | sample 2 | | sample 3 (Stevia only) | |
| | % | g | % | g | % | g | % | g |
| Full cream milk | 80.00 | 200.00 | 83.236 | 208.07 | 83.136 | 207.82 | 83.20 | 208.00 |
| Sugar | 10.00 | 25.00 | 5.00 | 12.50 | 5.00 | 12.50 | 5.00 | 12.50 |
| oat flakes | 10.00 | 25.00 | 10.00 | 25.00 | 10.00 | 25.00 | 10.00 | 25.00 |
| wheat flour | | | 0.30 | 0.75 | 0.30 | 0.75 | 0.30 | 0.75 |
| 1% solution Stevia | | | 1.40 | 3.52 | 1.50 | 3.77 | 1.50 | 3.75 |
| 2% solution YE2 | | | 0.064 | 0.16 | 0.0640 | 0.16 | | |
| | 100.00 | 250.00 | 100.00 | 250.00 | 100.0000 | 250.00 | 100.00 | 250.00 |
| comments | | | a bit less sweet | | a bit too sweet | | too sweet | |

Results: It appears from the results depicted in the above table that it is possible to achieve a sweetness of the test composition comparable to that of the control without any off-taste.

### EXAMPLE 5: Application test - soy milk

Soy milk was prepared by mixing the ingredients listed in table 9 below. The samples 1 and 3 referred to in table 10 have a sugar content which is reduced by 50% compared to the control.

**Table 9 - Preparation of base composition**

| | **Control** | | **Base** | |
|---|---|---|---|---|
| | % | g | % | g |
| Soy milk light/bio drink | 94.00 | 837.00 | 97.482 | 877.338 |
| Sugar | 6.00 | 63.00 | 2.50 | 22.50 |
| Stevia | | | 0.018 | 0.162 |
| | | | | |
| | 100.00 | 900.00 | 100.00 | 900.00 |

**Table 10 - Test compositions prepared with base:**

| Ingredients | **YE2** | **YE3** |
|---|---|---|
| Samples | 1 | 1 |
| Base | 100 g | 100 g |
| YE2/YE3 | 0.30 | 0.30 |
| Comments | Sweeter than control | Very good taste, close to control |

Results: It appears from the results depicted in the above table that it is possible to achieve a sweetness of the test composition comparable to that of the control without any off-taste.

### EXAMPLE 6: Sensory tests - Triangle test

### Objective:

The objective of the sensory tests is to determine if a sugar-reduced product is significant different compared to a control product with a full content of sugar. The terms and definitions used within this test are in accordance with the British

Standard ISO 4120:2004. The following terms and definitions were applied:
- Alpha-risk (α-risk): probability of concluding that a perceptible difference exists when such difference in fact does not exist (Type I error, significance level or positive rate).
- Beta-risk (β-risk) : probability of concluding that no perceptible difference exists when a difference in fact exists (Type II error, false negative rate).
- Difference: situation in which samples can be distinguished based on their sensory properties. The proportion of assessments in which a perceptible difference is detected between the two products is given the symbol p_{d}.
- Sample: unit of product prepared, presented and evaluated in the test.
- Sensitivity: general term used to summarize the performance characteristics of the test. In statistical terms the sensitivity of the test is defined by the values of α, β and p_{d}.
- Similarity: situation in which perceptible differences between the samples are so small that the products can be used interchangeably.

### Testing

Panelists received a set of three samples (a triad) and were informed that two of the samples are alike and one is different. The panelists were asked to report which sample they believe to be different, even if the selection is based only on a guess.

### Information about a triad:

Amount: approx. 30 g
Temperature: RT
Each sample had a different number consisting of three ciphers, e.g. 267

The number of correct responses provided by the panelists was counted and the significance was determined by reference to a statistical table (British Standard ISO 4120:2004). The panelists used prepared score sheets which utilized an equal number of the six possible sequences of two products, A and B:
ABB AAB ABA BAA BBA BAB

The statistical sensitivity of the test is a function of three values: α, β and p_{d} using the following guidelines:
A statistically significant result at
   - an α-risk of 10% to 5% (0.10-0.05) indicates slight evidence that a difference was apparent,
   - an α-risk of 5% to 1% (0.05-0.01) indicates moderate evidence that a difference was apparent,
   - an α-risk of 1% to 0.1% (0.01-0.001) indicates strong evidence that a difference was apparent,
   - an α-risk below 0.1% (<0.001) indicates very strong evidence that a difference was apparent,
For β-risks, the strength of the evidence that a difference was not apparent was assessed using the same criteria outlined as above substituting "was not apparent" for "was apparent").

The maximum allowable proportion of distinguishers, p_{d} falls into three ranges:
- p_{d} < 25% represent low value
- 35% < p_{d} <25% represent medium sized values
- p_{d} > 35% represent large value

The results of the triangle tests were as follows:
Vanilla Pudding:
   - control vs. sugar reduced with YE2 and Stevia: very slight evidence that a difference was apparent;
   - control vs. sugar reduced with Stevia: very slight evidence that a difference was apparent.
Chocolate Pudding:
   - control vs. sugar reduced with YE2 and Stevia: very slight evidence that a difference was apparent;
   - control vs. sugar reduced with Stevia: very strong evidence that a difference was apparent.
Ketchup:
   - control vs. sugar reduced with YE2 and Stevia: very slight evidence that a difference was apparent;
   - control vs. sugar reduced with Stevia: very strong evidence that a difference was apparent
Fruit Preparation:
   - control vs. sugar reduced with YE2 and Stevia: very slight evidence that a difference was apparent;
   - control vs. sugar reduced with Stevia: strong evidence that a difference was apparent.
Fruit Yoghurt:
   - control vs. sugar reduced with YE2 and Stevia: very slight evidence that a difference was apparent;
   - control vs. sugar reduced wit Stevia: slight evidence that a difference was apparent

## Claims

1. Food or beverage composition, comprising:
(a) one or more steviol glycosides in an amount effective to provide a sweet taste to said food or beverage composition; and
(b) a yeast extract or yeast autolysate in an amount effective to reduce or eliminate an off-taste that is caused by the one or more steviol glycosides
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w.

2. Food or beverage composition according to claim 1, wherein said composition is selected from the group consisting of yoghurt, pudding, fruit preparation, tomato ketchup, ice cream, chocolate, fruit or wine gums, confectionaries, cakes and sauces.

3. Food or beverage composition according to claim 1, wherein said composition is selected from the group consisting of drinking yoghurt, fruit juice, lemonade, sport and energy drinks, teas, coffees, milk drinks, soy milk drinks, soft drinks, and cacao.

4. Food or beverage composition according to any of claims 1-3, wherein said one or more steviol glycosides are present in the composition in an amount of at least 0.01% (w/w).

5. Food or beverage composition according to any of claims 1-4, wherein said yeast extract or yeast autolysate is present in the composition in an amount of at least 0.0005 (w/w).

6. Food or beverage composition according to any of claims 1-5, wherein said one or more steviol glycosides are selected from the group consisting of Stevioside, Rebaudioside A-F, and Dulcoside A.

7. Food or beverage composition according to any of claims 1-6, wherein said composition comprises a yeast extract.

8. Method for eliminating or reducing a steviol glycoside-related off-taste in a food or beverage composition, comprising
(a) providing a food or beverage composition that contains one or more steviol glycosides as a sweetening agent, and
(b) adding to said food or beverage composition an amount of a yeast extract or yeast autolysate which is effective to prevent or reduce said off-taste,
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).

9. Method for preparing a food or beverage composition, comprising
(a) providing a food or beverage composition;
(b) adding to said food or beverage composition one or more steviol glycosides in an amount effective to provide a sweet taste to said food or beverage composition; and
(c) adding to said food or beverage composition an amount of a yeast extract or yeast autolysate which is effective to prevent or reduce an off-taste that is caused by the one or more steviol glycosides,
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w.

10. Method according to any of claims 8 or 9, wherein said composition is selected from the group consisting of yoghurts, puddings, fruit preparations, tomato ketchups, sauces, condiments, ice creams, chocolates, candy, fruit or wine gums, jams, chocolate or hazelnut spreads, and the like.

11. Method any of claims 8-10, wherein said composition is selected from the group consisting of soda, fruit punch, drinking yoghurts, fruit juices, lemonades, energy and sport drinks, sweetened teas, milk drinks, sweetened powdered drinks, and the like.

12. Method according to any of claims 8-11, wherein said yeast extract or yeast autolysate is present in the composition in an amount of at least 0.001% (w/w), more preferably 0.02% (w/w).

13. Method according to any of claims 8-12, wherein said one or more steviol glycosides are selected from the group consisting of Stevioside, Rebaudioside A-F, and Dulcoside A.

14. Use of a yeast extract or yeast autolysate for eliminating or reducing a steviol glycoside-related off-taste in a food or beverage composition,
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).

15. Sweetening composition, comprising:
(a) one or more steviol glycosides; and
(b) a yeast extract or yeast autolysate
wherein the yeast extract comprises free amino acids in an amount of less than 15% (w/w) and 5'-nucleotides in an amount of 0-70% (w/w), and
wherein the yeast autolysate comprises free amino acids in an amount of less than 10% (w/w) and 5'-nucleotides in an amount of 0-45% (w/w).
